# FASCICULE DE BREVET EUROPEEN

(11) **EP 3 054 209 B1**
(45) Date de publication et mention de la délivrance du brevet: **23.10.2019**
(21) Numéro de dépôt: 16154343.4
(22) Date de dépôt: 04.02.2016
(51) Int. Cl.: F21S 41/663, B60Q 1/14

(54) **DISPOSITIF D'ÉCLAIRAGE POUR VÉHICULE AUTOMOBILE**
BELEUCHTUNGSVORRICHTUNG FÜR KRAFTFAHRZEUG
LIGHTING DEVICE FOR A MOTOR VEHICLE

(30) Priorité: 05.02.2015 FR 1550919
(43) Date de publication de la demande: 10.08.2016
(73) Titulaire: VALEO VISION, 93012 Bobigny Cedex (FR)
(72) Inventeur: REISS, Benoit, 95580 Magency (FR)

(56) Documents cités:
- EP-A1- 2 261 081
- EP-A2- 2 085 688
- WO-A1-2010/121948
- FR-A1- 2 942 020
- FR-A1- 2 991 251
- US-A1- 2004 263 346

## Description

### DOMAINE TECHNIQUE DE L'INVENTION

La présente invention concerne un dispositif d'éclairage notamment destiné à un projecteur de véhicule automobile.

### ARRIERE PLAN TECHNIQUE DE L'INVENTION

On connait des dispositifs d'éclairage pour véhicule automobile qui comprennent un module pour produire un faisceau de type code (aussi appelé feu de croisement) et un module complémentaire pour produire un faisceau de type route. L'utilisation de ces deux modules ensemble permet de produire un faisceau avec une fonction route améliorée.

Cependant, l'éclairement du faisceau code comme celui du faisceau route et leur positionnement relatif sont optimisés pour une route horizontale, et ce type de dispositif d'éclairage présente des inconvénients lorsque le véhicule se déplace par exemple sur une route vallonnée. En effet, lorsque l'inclinaison relative du véhicule par rapport à la route éclairée varie, l'éclairement produit par les faisceaux projetés sur la route n'est plus homogène et présente des taches plus lumineuses et des zones sombres. Le document EP 2 085 688 A2 décrit un dispositif selon le préambule de la revendication 1.

### BREF RESUME DE L'INVENTION

L'invention a pour but de pallier ces inconvénients en permettant d'utiliser un dispositif d'éclairage du type précité, doté de moyens permettant d'homogénéiser le faisceau projeté lorsque l'inclinaison relative du véhicule par rapport à la route éclairée varie.

A cet effet, l'invention propose un dispositif d'éclairage notamment pour véhicule automobile, comprenant au moins:
- une première source lumineuse et des premiers moyens optiques destinés à participer à la génération d'un premier faisceau présentant une coupure supérieure,
- une deuxième source lumineuse et des deuxièmes moyens optiques destinés à participer à la génération d'un deuxième faisceau présentant une coupure inférieure, et
- des moyens de commandes des première et deuxième sources lumineuses aptes à allumer conjointement ces première et deuxième sources pour générer simultanément les premier et deuxième faisceaux,
les premiers et deuxièmes moyens optiques étant aptes à projeter les premier et deuxième faisceaux de sorte à ce que la coupure inférieure soit disposée sur ou en dessous de la coupure supérieure pour former un faisceau route, le dispositif comportant une pluralité de deuxièmes sources lumineuses aptes à générer chacune une bande lumineuse et commandables sélectivement par les moyens de commandes, l'ensemble des bandes lumineuses formant le deuxième faisceau, le dispositif comportant en outre des moyens de réduction de l'intensité lumineuse d'au moins un des deux faisceaux en fonction de l'inclinaison relative du véhicule par rapport à la route sur laquelle il circule, le dispositif étant caractérisé en ce que les moyens de réduction de l'intensité lumineuse opèrent une réduction dont l'amplitude est différente pour deux au moins des deuxièmes sources lumineuses.

De cette façon, les zones susceptibles d'être sur-éclairées en cas d'inclinaison de la route par rapport au véhicule voient leur éclairement diminuer, homogénéisant ainsi le faisceau résultant.

Cette solution a l'avantage d'être simple à réaliser et permet plus de flexibilité dans la conception du projecteur, tant sur le plan optique que sur le plan mécanique.

Selon différents modes de réalisation de l'invention, qui peuvent être pris ensemble ou séparément :
- la coupure supérieure peut être horizontale et plate. En variante, la coupure supérieure peut présenter un ressaut vertical ou oblique ;
- les moyens de réduction de l'intensité lumineuse sont appliqués sur au moins une des première et deuxième sources lumineuses ;
- les moyens de réduction de l'intensité lumineuse sont appliqués sur les première et deuxième sources lumineuses ;
- les moyens de réduction de l'intensité lumineuse opèrent une réduction dont l'amplitude est d'autant plus grande que l'inclinaison relative du véhicule par rapport à la route est grande ;
- les moyens de réduction de l'intensité lumineuse opèrent une réduction, d'environ 30% lorsque l'angle relatif atteint environ 2°, et de 40% à 50% lorsqu'il atteint environ 5° ou plus ;
- la première source lumineuse, la deuxième source lumineuse, les premiers moyens optiques et les deuxièmes moyens optiques font partie d'un même module optique. On entend par «font partie d'un même module optique » le fait que les sources lumineuses et les moyens optiques sont montés sur une même platine, ladite platine étant fixée sur un boîtier du dispositif d'éclairage ;
- la première source lumineuse, la deuxième source lumineuse, les premiers moyens optiques et les deuxièmes moyens optiques font partie respectivement de modules optiques différents ;
- le deuxième module optique comporte au moins deux sources lumineuses aptes à générer chacune une bande lumineuse et commandables indépendamment ;
- les moyens de réduction de l'intensité lumineuse opèrent une réduction dont l'amplitude est supérieure pour les sources lumineuses produisant une partie centrale du deuxième faisceau ;
- au moins une des sources lumineuses est constituée par une puce semiconductrice émettrice de lumière, notamment une diode électroluminescente ;
- l'intensité est diminuée lorsque les deux modules sont en service simultanément et éventuellement lorsque l'angle relatif véhicule-route dépasse une certaine valeur prédéfinie ;
- la réduction de l'intensité lumineuse se fait, lorsque les sources lumineuses sont des LED, par réduction de l'amplitude maximum du courant de commande de ces diodes ;
- pour des diodes commandées par des impulsions, la largeur du signal (variation du rapport cyclique du signal de commande) peut être variée pour obtenir la variation d'éclairement recherchée ;
- des moyens formant capteur de l'inclinaison relative route-véhicule fournissent l'information d'angle aux moyens de commande de l'intensité lumineuse des sources des deux modules optiques ;
- le dispositif comportant une pluralité de premières sources lumineuses aptes à générer chacune une bande lumineuse et commandables sélectivement par les moyens de commandes, l'ensemble des bandes lumineuses formant le premier faisceau.

L'invention a également pour objet un système d'éclairage d'un véhicule automobile, le système comprenant un dispositif d'éclairage selon l'une des revendications précédentes, et des moyens capteur de l'inclinaison relative du véhicule à la route aptes à fournir l'information d'angle aux moyens de réduction de l'intensité lumineuse du dispositif d'éclairage.

### BREVE DESCRIPTION DES FIGURES

D'autres caractéristiques et avantages de l'invention ressortiront de la description détaillée qui suit, donnée à titre indicatif et illustrée par les dessins annexés, qui représentent :
- la figure 1, un schéma d'un exemple de réalisation d'un module d'éclairage fournissant un faisceau route ;
- la figure 2, le schéma d'un mode de réalisation du dispositif d'éclairage selon l'invention ;
- la figure 3, un diagramme illustrant l'éclairement produit sur une route horizontale par un dispositif d'éclairage formé d'un module code et d'un module route ;
- la figure 4, un diagramme illustrant l'éclairement produit sur une route inclinée par un dispositif d'éclairage formé d'un module code et d'un module route ;
- la figure 5, un diagramme analogue à celui de la figure 4 dans lequel l'intensité lumineuse du faisceau route a été réduite :
- la figure 6, un diagramme analogue à celui de la figure 4 dans lequel l'intensité lumineuse du faisceau code a été réduite ;
- la figure 7, un diagramme analogue à celui de la figure 4 dans lequel l'intensité lumineuse des deux faisceaux route et code ont été réduites.

Sur ces différentes figures, les mêmes références se rapportent aux mêmes éléments.

### DESCRIPTION DETAILLEE DES FIGURES

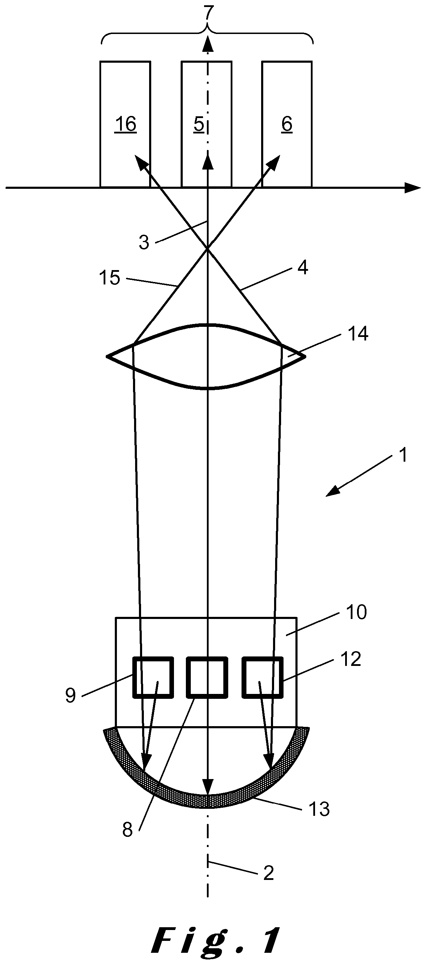

La figure 1 illustre un module d'éclairage 1 destiné à être installé à l'intérieur d'un projecteur avant d'un véhicule automobile.

Le module 1 permet de créer un faisceau de type route, d'axe optique 2, permettant la mise en oeuvre d'une fonction dite ADB (pour 'Adaptive Driving Beam' en anglais), qui autorise la génération dans le faisceau route d'une ou plusieurs zones sombres correspondant aux endroits où sont présents des véhicules venant en sens inverse et dont on veut éviter l'éblouissement, tout en éclairant largement le reste de la route.

A cet effet, le module 1 comporte une pluralité de sources lumineuses, par exemple trois sources 8, 9 et 12.

Les sources lumineuses 8, 9 et 12 sont par exemple des diodes électroluminescentes ou LED (pour Light Emitting Diode en anglais), portées et connectées électriquement par un support 10 du type carte de circuit imprimé, et dont les surfaces émissives sont par exemple carrées.

Le module 1 comporte encore des moyens optiques destinés à former le faisceau route à partir des rayons lumineux fournis par les sources, comportant des moyens de réflexion 13 et des moyens de projection 14.

Les rayons émis par les sources 8, 9 et 12 sont donc réfléchis par le réflecteur 13 en direction des moyens de projection 14. Ces moyens de réflexion sont par exemple constitués par un réflecteur unique, parabolique, elliptique, cylindrique ou encore à surface complexe.

Les moyens de projection 14 ont pour fonction de projeter sur la route les faisceaux lumineux 15, 3 et 4 engendrés respectivement par les sources 9, 8 et 12. Ces moyens de projection sont du type lentille, avec par exemple une face d'entrée cylindrique et une face de sortie concave.

Le faisceau lumineux issus du module 1 est globalement repéré 7 et se compose de bandes lumineuses correspondant aux sources, respectivement les bandes 6, 5 et 16 correspondant aux sources 9, 8 et 12. Ces bandes lumineuses sont ici rendues visibles par projection sur un écran perpendiculaire à l'axe optique 2 et situé par exemple à 25m du module d'éclairage 1.Les sources 9, 8 et 12 étant commandables indépendamment, il apparait que l'extinction d'une des sources lumineuses permet de produire une zone sombre dans le faisceau lumineux 7 du module 1.

Le faisceau lumineux issus du module 1 comprend une coupure généralement horizontale, ou présentant le cas échéant une partie oblique, que l'on nomme coupure inférieure. Le faisceau lumineux s'étend au-delà de cette coupure inférieure.

Un tel module à fonction ADB est décrit à titre d'exemple dans le document FR 2 991 251.

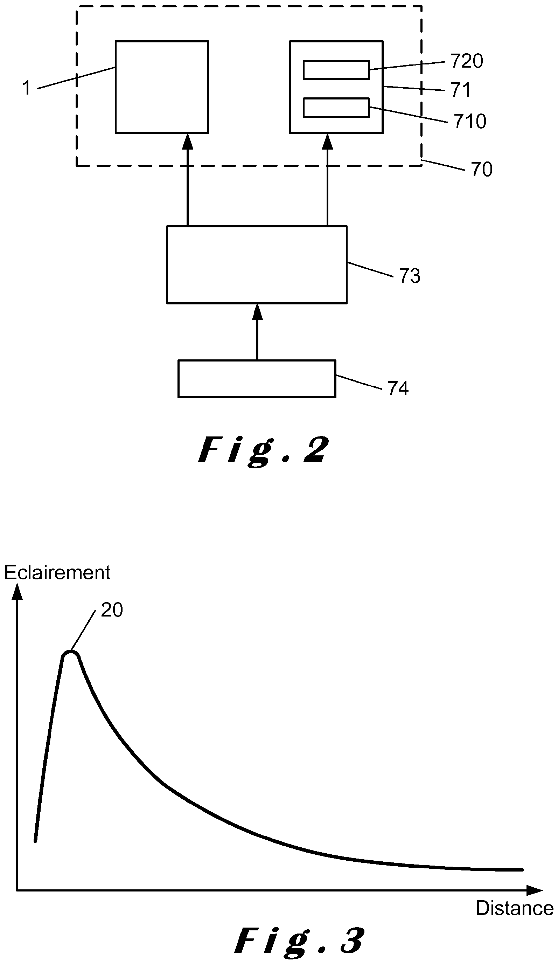

La figure 2 représente schématiquement un mode de réalisation du dispositif d'éclairage selon l'invention.

Il est formé d'au moins un module optique 71 fournissant par exemple un faisceau code, réalisé de toute façon connue, et comportant au moins une source lumineuse 710 et des moyens optiques 720 destinés à former le faisceau code à partir des rayons lumineux fournis par la source.

Le faisceau lumineux issus du module optique 71 comprend généralement une coupure dite coupure supérieure, le faisceau s'étendant en-dessous de cette coupure. La coupure peut présenter selon une variante de l'invention un ressaut vertical, et selon une autre variante une coupure oblique, en particulier à 15°.

Dans une variante de l'invention, le module optique 71 peut aussi fournir un faisceau de type plat (« flat » en anglais), dont la coupure est horizontale et plate. A ce module 71 est associé un module complémentaire, par exemple le module 1 du type à fonction ADB décrit ci-dessus, le faisceau route étant obtenu par addition des faisceaux fournis par les deux modules 71 et 1.

Dans une variante de réalisation, le module 71 peut être réalisé comme le module 1 de la figure 1, constitué d'une pluralité de bandes lumineuses correspondant à une pluralité de sources. La pluralité de sources étant commandables indépendamment, il apparait que l'extinction d'une des sources lumineuses permet de produire une zone sombre dans le faisceau lumineux produit par le module 71.

L'association des faisceaux lumineux issus du module 1 et du module 71 forme un faisceau de type route, comprenant une coupure supérieure et une coupure inférieure, la coupure inférieure pouvant être disposée sur ou en dessous de la coupure supérieure pour former le faisceau route.

Dans un mode de réalisation, la source lumineuse (710), les sources lumineuses (9, 8, 12), les moyens optiques (720) et les moyens optiques (13, 14) peuvent faire partie d'un même module optique, c'est-à-dire que les sources lumineuses et les moyens optiques sont montés sur une même platine, ladite platine étant fixée sur un boîtier du dispositif d'éclairage.

Dans un autre mode de réalisation, la source lumineuse (710), les sources lumineuses (9, 8, 12), les moyens optiques (720) et les moyens optiques (13, 14) peuvent faire partie d'un module optique différent.

La figure 3 est un diagramme représentant un exemple d'éclairement produit par le dispositif d'éclairage tel que ci-dessus, lorsque les deux modules sont en fonctionnement, sur une route horizontale ou, plus généralement, lorsque le véhicule n'est pas incliné par rapport à la route.

Il s'agit de l'éclairement, en lux, mesuré dans l'axe du véhicule en fonction de la distance par rapport à ce véhicule.

Cette courbe présente un maximum 20 proche du véhicule, fourni essentiellement par le module code, la courbe décroissant ensuite lentement et de façon monotone lorsqu'on s'éloigne du véhicule.

Cette courbe est le résultat des réglages de l'éclairement des deux modules, faits pour que les deux faisceaux se recouvrent légèrement en vue d'obtenir un éclairement homogène.

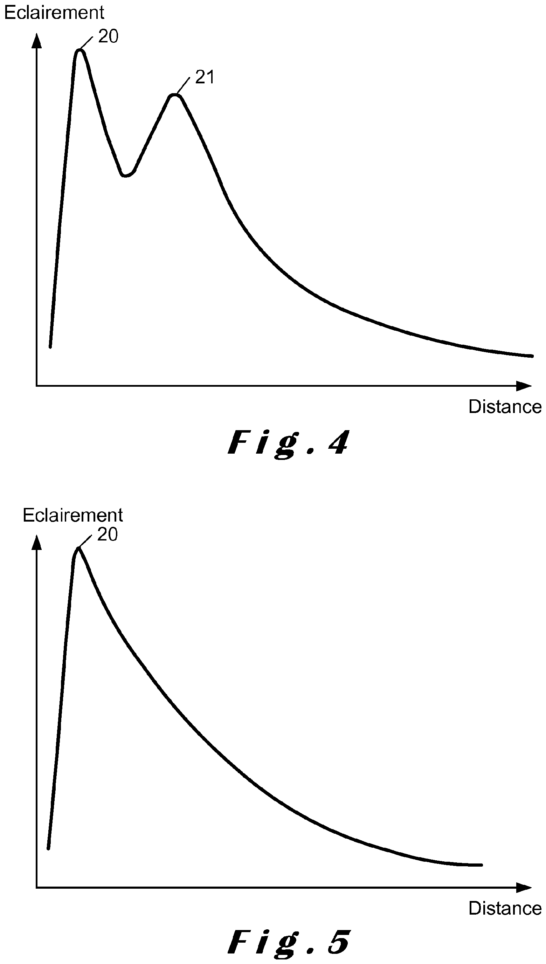

La figure 4 est un diagramme analogue à celui de la figure 2, mais dans le cas où la route et le véhicule font un angle relatif, soit du fait de l'inclinaison de la route, soit du fait d'une modification d'assiette du véhicule (véhicule incliné vers l'avant).

Au fur et à mesure de l'augmentation de l'angle relatif, la décroissance de l'éclairement après le maximum 20 n'est plus monotone et on voit apparaitre un second pic 21 après le pic 20, assez proche de ce dernier, dont l'intensité croit avec l'angle. Si l'angle relatif continue à augmenter, par exemple jusque vers 5°, l'amplitude des pics peut s'inverser, le pic 21 devenant plus grand que le pic 20 (configuration non représentée sur les figures).

Cela est dû à l'éclairement du module complémentaire « route » qui, du fait de l'inclinaison de la route par rapport au véhicule, éclaire à une distance plus courte et crée un sur-éclairement dans les zones proches.

Cela se traduit sur la route éclairée devant le véhicule par des zones sur-éclairées qui, lorsque l'angle relatif est élevé, sont séparées par des zones sombres.

Lorsque la route est inclinée par rapport au véhicule, l'éclairement « route » n'est donc plus homogène.

Pour pallier ce défaut, le dispositif d'éclairage de la figure 2 comporte des moyens 73 pour commander l'intensité des sources lumineuses des modules code 71 et route 1, et plus précisément diminuer cette intensité lorsque les deux modules sont en service simultanément et que l'angle relatif véhicule-route dépasse une certaine valeur prédéfinie.

La réduction de l'intensité lumineuse se fait par exemple, lorsque les sources lumineuses sont des LED, par réduction de l'amplitude maximum du courant de commande de ces diodes. Lorsque les diodes sont commandées par des impulsions, on peut en fait varier la largeur (variation du rapport cyclique du signal de commande) pour obtenir la variation d'éclairement recherchée.

A titre d'exemple, l'intensité est réduite par paliers, de l'ordre de 30% lorsque l'angle relatif atteint environ 2°, jusqu'à 40%, voire 50% lorsqu'il atteint environ 5° ou plus.

Egalement à titre d'exemple, lorsque le module comporte une pluralité de sources comme le module décrit figure 1, il est possible de moduler la diminution d'intensité selon les sources, et non plus d'appliquer une diminution uniforme, de sorte à diminuer plus fortement l'intensité de celles des sources dont l'éclairement est le plus en recouvrement avec le faisceau code. Par exemple, cette diminution peut être plus importante pour les sources produisant la partie centrale du faisceau.

De la sorte, les zones sur-éclairées précédentes le sont moins, et le faisceau résultant est plus homogène.

La figure 5 représente un diagramme analogue à celui de la figure 4, illustrant le cas où c'est l'intensité lumineuse du module « route » qui a été réduite.

Par rapport au diagramme de la figure 4, il apparait que le pic 21 dû au module route a disparu et on obtient un éclairement voisin de celui de la figure 3 sur route horizontale.

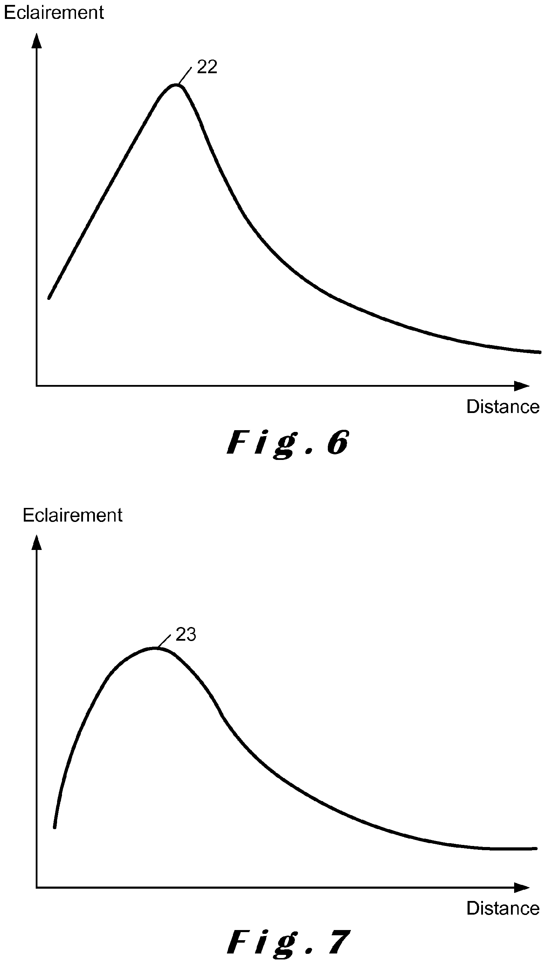

Dans une variante de l'invention, les moyens 76 de la figure 2 réduisent l'intensité lumineuse du module code, comme représenté sur le diagramme de la figure 6.

On obtient ici encore un éclairement homogène ne présentant qu'un pic 22, celui-ci étant toutefois légèrement décalé vers les plus grandes distances, du fait de la diminution d'intensité lumineuse du module code.

Dans une autre variante, illustrée par le diagramme de la figure 7, les moyens 76 réduisent l'intensité lumineuse des deux modules 1 et 71.

L'éclairement obtenu est homogène et ne présente qu'un pic, 23, un peu décalé vers les grandes distances mais moins que dans la variante illustrée figure 6, les valeurs atteintes par l'éclairement étant globalement moins élevées et la courbe plus étalée que les précédentes.

On a encore représenté sur la figure 2 des moyens 74 formant capteur de l'inclinaison relative route-véhicule, qui fournissent l'information d'angle aux moyens 73 de commande de l'intensité lumineuse des sources des modules 1 et 71. Ces moyens sont par exemple un capteur d'informations externes, comme un GPS qui fournit la localisation du véhicule et les données associées comme la pente de la route. Ces moyens peuvent comprendre, alternativement ou en complément, un récepteur d'informations générées par des systèmes embarqués sur le véhicule, comme une ou plusieurs caméras, dont les images fournies sont analysées pour donner l'information d'angle recherchée. Ces moyens 73 peuvent encore comprendre des moyens de détection de l'assiette du véhicule par rapport à la route, tels accéléromètre ou détection de poids sur les essieux.

Bien entendu, l'invention qui a été décrite dans le cadre de deux modules, n'est pas limitée à cette configuration et s'applique aux cas où le dispositif d'éclairage comporte un nombre plus grand de modules. De façon analogue, elle s'applique également au cas où le dispositif d'éclairage comporte un module unique comportant à la fois les sources lumineuses et les moyens optiques des deux modules décrits plus haut.

## Revendications

1. Dispositif d'éclairage notamment pour véhicule automobile, comprenant au moins:
- une première source lumineuse (710) et des premiers moyens optiques (720) destinés à participer à la génération d'un premier faisceau présentant une coupure supérieure,
- une deuxième source lumineuse (9, 8, 12) et des deuxièmes moyens optiques (13, 14) destinés à participer à la génération d'un deuxième faisceau présentant une coupure inférieure, et
- des moyens de commandes des première et deuxième sources lumineuses aptes à allumer conjointement ces première et deuxième sources pour générer simultanément les premier et deuxième faisceaux, les premiers et deuxièmes moyens optiques étant aptes à projeter les premier et deuxième faisceaux de sorte à ce que la coupure inférieure soit disposée sur ou en dessous de la coupure supérieure pour former un faisceau route,
le dispositif comportant une pluralité de deuxièmes sources lumineuses (9, 8, 12) aptes à générer chacune une bande lumineuse (5, 6, 16) et commandables sélectivement par les moyens de commandes, l'ensemble des bandes lumineuses formant le deuxième faisceau le dispositif comportant en outre des moyens (73) de réduction de l'intensité lumineuse d'au moins un des deux faisceaux en fonction de l'inclinaison relative du véhicule par rapport à la route sur laquelle il circule,
le dispositif étant **caractérisé en ce que** les moyens (73) de réduction de l'intensité lumineuse opèrent une réduction dont l'amplitude est différente pour deux au moins des deuxièmes sources lumineuses.

2. Dispositif d'éclairage selon la revendication 1, dans lequel les moyens (73) de réduction de l'intensité lumineuse sont appliqués sur au moins une des première (710) et deuxième (9, 8, 12) sources lumineuses.

3. Dispositif d'éclairage selon la revendication 2, dans lequel les moyens (73) de réduction de l'intensité lumineuse sont appliqués sur les première (710) et deuxième (9, 8, 12) sources lumineuses.

4. Dispositif d'éclairage selon l'une quelconque des revendications précédentes, dans lequel les moyens (73) de réduction de l'intensité lumineuse opèrent une réduction dont l'amplitude est d'autant plus grande que l'inclinaison relative du véhicule par rapport à la route est grande.

5. Dispositif d'éclairage selon la revendication 4, dans lequel les moyens (73) de réduction de l'intensité lumineuse opèrent une réduction d'environ 30% lorsque l'angle relatif atteint environ 2°, et entre 40% à 50% lorsqu'il atteint environ 5° ou plus.

6. Dispositif d'éclairage selon l'une quelconque des revendications précédentes, dans lequel la première source lumineuse (710), la deuxième source lumineuse (9, 8, 12), les premiers moyens optiques (720) et les deuxièmes moyens optiques (13, 14) font partie d'un même module optique.

7. Dispositif d'éclairage selon l'une quelconque des revendications 1 à 5, dans lequel la première source lumineuse (710), la deuxième source lumineuse (9, 8, 12), les premiers moyens optiques (720) et les deuxièmes moyens optiques (13, 14) font partie respectivement de modules optiques différents (71, 1).

8. Dispositif d'éclairage selon l'une des revendications 1 à 7, dans lequel les moyens (73) de réduction de l'intensité lumineuse opèrent une réduction dont l'amplitude est supérieure pour les sources lumineuses produisant une partie centrale du deuxième faisceau.

9. Dispositif d'éclairage selon l'une quelconque des revendications précédentes, dans lequel au moins une des sources lumineuses (8, 9, 12, 710) est constituée par une puce semiconductrice émettrice de lumière, notamment une diode électroluminescente.

10. Système d'éclairage d'un véhicule automobile, le système comprenant un dispositif d'éclairage selon l'une des revendications précédentes, et des moyens capteur de l'inclinaison relative du véhicule à la route aptes à fournir l'information d'angle aux moyens de réduction de l'intensité lumineuse du dispositif d'éclairage.

## Patentansprüche

1. Beleuchtungsvorrichtung, insbesondere für Kraftfahrzeuge, umfassend mindestens:
- eine erste Lichtquelle (710) und erste optische Mittel (720) zum Mitwirken an der Erzeugung eines ersten Strahls mit einer oberen Hell-Dunkel Grenze:
- eine zweite Lichtquelle (9, 8, 12) und eine zweite optische Mittel (13, 14) zum Mitwirken an der Erzeugung eines zweiten Strahls mit einer niedrigeren Hell-Dunkel Grenze, und
- Steuermittel zum Steuern der ersten und zweiten Lichtquellen, die in der Lage sind, diese ersten und zweiten Lichtquellen gemeinsam einzuschalten, um gleichzeitig den ersten und zweiten Strahl zu erzeugen, wobei die ersten und zweiten optischen Mittel in der Lage sind, den ersten und zweiten Strahl so zu projizieren, dass der untere Hell-Dunkel Grenze auf oder unter dem oberen Hell-Dunkel Grenze angeordnet ist, um ein Fernlicht zu bilden,
wobei die Beleuchtungsvorrichtung eine Vielzahl von zweiten Lichtquellen (9, 8, 12) umfasst, die jeweils in der Lage sind, einen Lichtstreifen (5, 6, 16) zu erzeugen und selektiv durch die Steuermittel steuerbar sind, wobei alle Lichtstreifen den zweiten Strahl bilden
wobei die Beleuchtungsvorrichtung ferner Mittel (73) zum Reduzieren der Lichtintensität von mindestens einem der beiden Strahlen in Abhängigkeit von der relativen Neigung des Fahrzeugs in Bezug auf die Straße, auf der es fährt, umfasst
wobei die Beleuchtungsvorrichtung **dadurch gekennzeichnet ist, dass** die Mittel (73) zum Reduzieren der Lichtintensität eine Reduktion bewirken, deren Amplitude für mindestens zwei der zweiten Lichtquellen unterschiedlich ist.

2. Beleuchtungsvorrichtung nach Anspruch 1, bei der die Mittel (73) zum Reduzieren der Lichtintensität auf mindestens eine der ersten (710) und zweiten (9, 8, 12) Lichtquellen aufgebracht sind.

3. Beleuchtungsvorrichtung nach Anspruch 2, bei der die Mittel (73) zum Reduzieren der Lichtintensität auf die ersten (710) und zweiten (9, 8, 12) Lichtquellen aufgebracht sind.

4. Beleuchtungsvorrichtung nach einem der vorstehenden Ansprüche, bei der die Mittel (73) zur Reduzierung der Lichtintensität eine Reduzierung bewirken, deren Amplitude umso größer ist, je größer die relative Neigung des Fahrzeugs in Bezug auf die Straße ist.

5. Beleuchtungsvorrichtung nach Anspruch 4, wobei die Mittel (73) zum Reduzieren der Lichtintensität eine Reduktion von etwa 30% bewirken, wenn der relative Winkel etwa 2° erreicht, und zwischen 40% und 50%, wenn er etwa 5° oder mehr erreicht.

6. Beleuchtungsvorrichtung nach einem der vorstehenden Ansprüche, bei der die erste Lichtquelle (710), die zweite Lichtquelle (9, 8, 12), die erste optische Mittel (720) und die zweite optische Mittel (13, 14) Teil desselben optischen Moduls sind.

7. Beleuchtungsvorrichtung nach einem der Ansprüche 1 bis 5, wobei die erste Lichtquelle (710), die zweite Lichtquelle (9, 8, 12), die erste optische Mittel (720) und die zweite optische Mittel (13, 14) Teil verschiedener optischer Module (71, 1) sind.

8. Beleuchtungsvorrichtung nach einem der Ansprüche 1 bis 7, bei der die Mittel (73) zum Reduzieren der Lichtintensität eine Reduktion bewirken, deren Amplitude bei Lichtquellen, die einen zentralen Teil des zweiten Strahls erzeugen, größer ist.

9. Beleuchtungsvorrichtung nach einem der vorstehenden Ansprüche, bei der mindestens eine der Lichtquellen (8, 9, 12, 710) aus einem lichtemittierenden Halbleiterchip, insbesondere einer Elektrolumineszenzdiode, besteht.

10. Beleuchtungssystem für ein Kraftfahrzeug, wobei das System eine Beleuchtungsvorrichtung nach einem der vorstehenden Ansprüche und Mittel zum Erfassen der relativen Neigung des Fahrzeugs zur Straße umfasst, die in der Lage sind, Winkelinformationen an die Mittel zum Reduzieren der Lichtintensität der Beleuchtungsvorrichtung zu liefern.

## Claims

1. Lighting device, in particular for motor vehicles, comprising at least:
- a first light source (710) and first optical means (720) for participating in the generation of a first beam with an upper cut-off:
- a second light source (9, 8, 12) and second optical means (13, 14) for participating in the generation of a second beam with a lower cut-off, and
- control means for controlling the first and second light sources capable of jointly switching on these first and second light sources to simultaneously generate the first and second beams, the first and second optical means being capable of projecting the first and second beams so that the lower cut-off is arranged on or below the upper cut-off to form a driving beam,
the device comprising a plurality of second light sources (9, 8, 12) each capable of generating a light strip (5, 6, 16) and selectively controllable by the control means, all the light strips forming the second beam
the device further comprises means (73) for reducing the light intensity of at least one of the two beams as a function of the relative inclination of the vehicle with respect to the road on which it is travelling
the device being **characterized in that** the means (73) for reducing the light intensity operate a reduction whose amplitude is different for at least two of the second light sources.

2. Lighting device according to claim 1, in which the means (73) for reducing the light intensity are applied to at least one of the first (710) and second (9, 8, 12) light sources.

3. Lighting device according to claim 2, in which the means (73) for reducing the light intensity are applied to the first (710) and second (9, 8, 12) light sources.

4. Lighting device according to any of the preceding claims, in which the means (73) for reducing the light intensity operate a reduction whose amplitude is all the greater the greater the relative inclination of the vehicle with respect to the road.

5. Lighting device according to claim 4, wherein the means (73) for reducing light intensity operate a reduction of about 30% when the relative angle reaches about 2°, and between 40% and 50% when it reaches about 5° or more.

6. Lighting device according to any of the above claims, in which the first light source (710), the second light source (9, 8, 12), the first optical means (720) and the second optical means (13, 14) are part of the same optical module.

7. Lighting device according to any of claims 1 to 5, wherein the first light source (710), the second light source (9, 8, 12), the first optical means (720) and the second optical means (13, 14) are part of different optical modules (71, 1) respectively.

8. Lighting device according to one of claims 1 to 7, in which the means (73) for reducing the light intensity operate a reduction whose amplitude is greater for light sources producing a central part of the second beam.

9. Lighting device according to any of the preceding claims, in which at least one of the light sources (8, 9, 12, 710) consists of a semiconductor light-emitting chip, in particular an electroluminescent diode.

10. Lighting system for a motor vehicle, the system comprising a lighting device according to one of the above claims, and means for detecting the relative inclination of the vehicle to the road, capable of providing angle information to the means for reducing the light intensity of the lighting device.
